# EUROPEAN PATENT APPLICATION

(11) **EP 4 620 743 A1**
(43) Date of publication of application: **24.09.2025**
(21) Application number: 25163355.8
(22) Date of filing: 12.03.2025
(51) Int. Cl.: B60R 16/037, G06F 3/16, G10L 15/22, G10L 15/18

(54) **SHORTCUT INSTRUCTION GENERATION METHOD AND APPARATUS, VEHICLE, AND COMPUTER-READABLE STORAGE MEDIUM**

(30) Priority: 13.03.2024 CN 202410290000
(71) Applicant: BYD Company Limited, Shenzhen, Guangdong 518118 (CN)
(72) Inventor: GAO, Ming, Shenzhen, 518118 (CN); SHEN, Zhong, Shenzhen, 518118 (CN); WANG, Jia, Shenzhen, 518118 (CN); HUANG, Xu, Shenzhen, 518118 (CN); ZHOU, Xinxin, Shenzhen, 518118 (CN)
(74) Representative: Taor, Simon Edward William

(57) **Abstract**

The present disclosure discloses a shortcut instruction generation method and apparatus, a vehicle, and a computer-readable storage medium. The method includes: obtaining a first speech request for setting a target shortcut instruction, sending the first speech request to a server, and determining, according to an action recognition result and a condition recognition result sent by the server, a target action queue and a target condition group corresponding to the target action queue, to generate the target shortcut instruction. In this way, the vehicle of the present disclosure can complete the generation of the target shortcut instruction according to the first speech request of the user and the action recognition result and the condition recognition result determined by the server, thereby avoiding that the user needs to manually type the shortcut instruction, and improving the usage experience of the shortcut instruction. In the present disclosure, the server can be used to recognize an action and a condition in the first speech request, avoiding that the vehicle locally recognizes the first speech request, thereby reducing the load of the vehicle and ensuring the recognition efficiency of the action recognition result and the condition recognition result.

## Description

### FIELD

The present disclosure relates to the technical field of vehicles, and in particular, to a shortcut instruction generation method, an electronic device, a vehicle, and a computer-readable storage medium.

### BACKGROUND

To meet user needs, vehicles in related technologies support users to set automatic instructions, so that vehicles can execute specific actions under specific conditions, for example, air conditioning is automatically turned on when temperatures inside vehicles exceed a preset temperature. However, the setting of the automatic instructions usually requires users to execute operations such as typing or clicking multiple times, which results in cumbersome steps and poor user experience.

### SUMMARY

The present disclosure provides a shortcut instruction generation method, an electronic device, a shortcut instruction generation apparatus, a vehicle, and a computer-readable storage medium.

An implementation of the present disclosure provides a shortcut instruction generation method, including:
obtaining a first speech request for setting a target shortcut instruction, the shortcut instruction being configured to instruct a vehicle to execute, when a condition group is satisfied, an action in an action queue corresponding to the condition group;
sending the first speech request to a server, the server being configured to determine an action recognition result and a condition recognition result according to the first speech request; and
determining, according to the action recognition result and the condition recognition result sent by the server, a target action queue and a target condition group corresponding to the target action queue, to generate the target shortcut instruction.

In the shortcut instruction generation method provided by this implementation of the present disclosure, the vehicle can obtain the first speech request for setting the target shortcut instruction, send the first speech request to the server, so that the server determines the action recognition result and the condition recognition result according to the first speech request, and when receiving the action recognition result and the condition recognition result sent by the server, determine, according to the action recognition result and the condition recognition result, the target action queue and the target condition group corresponding to the target action queue, to generate the target shortcut instruction.

In this way, in this implementation of the present disclosure, the vehicle can complete the generation of the target shortcut instruction according to the first speech request of the user and the action recognition result and the condition recognition result determined by the server and the first speech request, thereby avoiding to some extent that the user needs to manually type the shortcut instruction, and improving the usage experience of the shortcut instruction. The vehicle of this implementation of the present disclosure can use the server to recognize an action and a condition in the first speech request, avoiding that the vehicle locally recognizes the action and the condition in the first speech request, thereby reducing the load of the vehicle to some extent and ensuring the recognition efficiency of the action recognition result and the condition recognition result to some extent.

In some implementations of the present disclosure, an onboard system of the vehicle includes a script layer and a Java layer, and the method further includes:
when determining, based on an execution function in the script layer, that the target condition group is satisfied, executing an action in the target action queue through the Java layer.

In this way, this implementation of the present disclosure can complete the execution of the target shortcut instruction based on the interaction between the Java layer and the script layer, and ensure the stable execution of the target shortcut instruction to some extent. Moreover, the target condition group in this implementation of the present disclosure is expressed based on a script language, allowing a complex relationship between conditions to be constructed simply and efficiently.

In some implementations of the present disclosure, the method further includes:
when determining, based on the execution function, that the target condition group is not satisfied, transferring a listening event to the Java layer, the Java layer setting a listener when receiving the listening event; and
calling back a trigger listening event of the script layer when the listener responds.

In this way, in this implementation of the present disclosure, when the target condition group has not been satisfied, the vehicle can listen to the target condition group to wait for the target condition group to be satisfied, which ensures the reliable execution of the target condition group to some extent.

In some implementations of the present disclosure, at least one target condition group is provided, at least one target action queue is provided, one target condition group corresponds to one target action queue, and the calling back a trigger listening event of the script layer when the listener responds includes:
when the listener responds, calling back the trigger listening event and sending condition group identification information of the target condition group to the script layer; and
determining, based on the trigger listening event, whether the target condition group corresponding to the condition group identification information is satisfied.

In this way, in this implementation of the present disclosure, the corresponding target condition group can be detected according to the condition group identification information of the target condition group.

In some implementations of the present disclosure, the determining, according to the action recognition result and the condition recognition result sent by the server, a target action queue and a target condition group corresponding to the target action queue, to generate the target shortcut instruction includes:
determining the target action queue and the target condition group in response to an operation of editing the action recognition result and/or the condition recognition result, to generate the target shortcut instruction.

In this way, in this implementation of the present disclosure, in response to the operation of editing the action recognition result and/or the condition recognition result, the vehicle can determine the target action queue and the target condition group based on the edited action recognition result and/or condition recognition result, avoiding directly using the action recognition result and the condition recognition result.

In some implementations of the present disclosure, the condition recognition result includes a candidate condition group, the action recognition result includes a candidate action queue corresponding to the candidate condition group, and the determining the target action queue and the target condition group in response to an operation of editing the action recognition result and/or the condition recognition result, to generate the target shortcut instruction includes:
in response to an operation of editing at least one of the candidate action queue, the candidate condition group, and a correspondence between the candidate action queue and the candidate condition group, determining the target action queue and the target condition group to generate the target shortcut instruction.

In this way, in this implementation of the present disclosure, the vehicle can modify at least one of the candidate action queue, the candidate condition group, and the correspondence between the candidate action queue and the candidate condition group based on the editing operation triggered by the user, so that the target action queue and the target condition group corresponding to the target action queue can be set properly.

In some implementations of the present disclosure, the method further includes:
controlling a display component of the vehicle to display the action recognition result and the condition recognition result.

In this way, in this implementation of the present disclosure, the vehicle can control the display component to display the action recognition result and the condition recognition result fed back by the server, so that the user can edit the action recognition result and/or the condition recognition result based on display content of the display component, thereby ensuring the reliable execution of the editing operation to some extent.

In some implementations of the present disclosure, at least one target condition group is provided, at least one target action queue is provided, one target condition group corresponds to one target action queue, and the method further includes:
executing the corresponding target action queue according to the satisfied target condition group in the target shortcut instruction.

In this way, in this implementation of the present disclosure, the target action queue corresponding to the satisfied target condition group can be executed during the execution of the target shortcut instruction, thereby ensuring the proper execution of the target shortcut instruction to some extent.

In some implementations of the present disclosure, the obtaining a first speech request for setting a target shortcut instruction includes:
when the vehicle is in a shortcut instruction setting state, obtaining the first speech request.

In this way, in this implementation of the present disclosure, the vehicle can obtain, in the shortcut instruction setting state, the first speech request for setting the target shortcut instruction, thereby ensuring the proper setting of the target shortcut instruction to some extent.

In some implementations of the present disclosure, the method further includes:
when the vehicle is in a preset working state and a second speech request is obtained, entering the shortcut instruction setting state.

In this way, in this implementation of the present disclosure, the vehicle can enter the shortcut instruction setting state when the vehicle is in the preset working state and the second speech request triggered by the user is obtained.

In some implementations of the present disclosure, the action recognition result and the condition recognition result are jointly obtained by the server by executing natural language processing on a speech recognition result of the first speech request based on a pre-trained natural language processing model.

In this way, in this implementation of the present disclosure, the condition recognition result and the action recognition result can be obtained based on the speech recognition result of the first speech request and the pre-trained natural language processing model. Therefore, the accuracy of the condition recognition result and the action recognition result can be ensured.

An implementation of the present disclosure provides an electronic device, including a transceiver unit and a processing unit;
the transceiver unit being configured to obtain a first speech request for setting a target shortcut instruction, the shortcut instruction being configured to instruct a vehicle to execute, when a condition group is satisfied, an action in an action queue corresponding to the condition group; and
the processing unit being configured to send the first speech request to a server and determine, according to an action recognition result and a condition recognition result sent by the server, a target action queue and a target condition group corresponding to the target action queue, to generate the target shortcut instruction, and the server being configured to determine the action recognition result and the condition recognition result according to the first speech request.

An implementation of the present disclosure provides a vehicle, including a memory and a processor, the memory storing a computer program, and when the computer program is executed by the processor, the shortcut instruction generation method being executed.

An implementation of the present disclosure provides a computer-readable storage medium, storing a computer program, and when the computer program is executed by one or more processors, the shortcut instruction generation method being executed.

In the electronic device, the vehicle, and the computer-readable storage medium provided in the implementations of the present disclosure, the generation of the target shortcut instruction can be completed according to the first speech request of the user and the action recognition result and the condition recognition result determined by the server, thereby avoiding to some extent that the user needs to manually type the shortcut instruction, and improving the usage experience of the shortcut instruction. The vehicle of this implementation of the present disclosure can use the server to recognize an action and a condition in the first speech request, avoiding that the vehicle locally recognizes the action and the condition in the first speech request, thereby reducing the load of the vehicle to some extent and ensuring the recognition efficiency of the action recognition result and the condition recognition result to some extent.

Other aspects and advantages of the implementations of the present disclosure will be given in the following description, some of which will become apparent from the following description or may be learned from practices of the implementations of the present disclosure.

### BRIEF DESCRIPTION OF THE DRAWINGS

The foregoing and/or additional aspects and advantages of the present disclosure will become apparent and comprehensible in the description of the implementations made with reference to the following accompanying drawings.
FIG. 1 is a schematic flowchart of a shortcut instruction generation method according to some implementations of the present disclosure;
FIG. 2 is a schematic diagram of a shortcut instruction generation apparatus according to some implementations of the present disclosure;
FIG. 3 is a schematic flowchart of a shortcut instruction generation method according to some implementations of the present disclosure;
FIG. 4 is a schematic diagram of a condition group according to some implementations of the present disclosure;
FIG. 5 is a schematic flowchart of a shortcut instruction generation method according to some implementations of the present disclosure;
FIG. 6 is a schematic flowchart of a shortcut instruction generation method according to some implementations of the present disclosure;
FIG. 7 is a schematic flowchart of a shortcut instruction generation method according to some implementations of the present disclosure;
FIG. 8 is a schematic diagram of an application scenario according to some implementations of the present disclosure;
FIG. 9 is a schematic diagram of an application scenario according to some implementations of the present disclosure;
FIG. 10 is a schematic flowchart of a shortcut instruction generation method according to some implementations of the present disclosure; and
FIG. 11 is a schematic flowchart of a shortcut instruction generation method according to some implementations of the present disclosure.

### DETAILED DESCRIPTION

Implementations of the present disclosure are described in detail below, and examples of the implementations are shown in accompanying drawings, where the same or similar elements or the elements having same or similar functions are denoted by the same or similar reference numerals throughout the description. The implementations described below with reference to the accompanying drawings are exemplary and used only for explaining implementations of the present disclosure, and should not be construed as a limitation on the implementations of the present disclosure.

To meet user needs, current smart products (for example, mobile phones, automobiles, and bracelets) usually support users to set automatic tasks or automatic instructions. For example, users can set a power on/off instruction of a specific time to power on or off a phone at the specific time. For another example, a user can set an automatic opening and closing instruction so that an air conditioner of a vehicle automatically starts and cools under a specific condition, for example, when a temperature inside the vehicle is higher than 26 degrees.

However, automatic instructions usually require users to manually execute selection or typing operations before completing setting of the automatic instructions. For example, the user needs to set a "function/action to be executed" (hereinafter referred to as "action") and an "execution condition of the function/action" (hereinafter referred to as "condition"). For example, only after a user sets the "power on function" and sets the execution condition of the "power on function" to "9 a.m. every day", a phone can automatically power on at 9 a.m.

Besides, although the settings of actions and conditions can be supported, most products only support the combination of a single condition and a single action, that is, support a user to set a simple command including one condition and one action, and it is difficult to support a complex instruction formed by a "complex condition group including multiple conditions" and an "action combination including multiple actions".

At the same time, the settings of actions and conditions require users to execute operations such as clicking and/or typing multiple times, which is relatively cumbersome. Moreover, the operations such as clicking and/or typing usually need to be executed by a user on a mobile phone. In other words, when a user needs to set an automatic instruction of a vehicle, the user usually needs to download a relevant application on the mobile phone and execute operations such as clicking and/or typing in a display window of the application, which reduces to some extent the convenience of users to set automatic instructions.

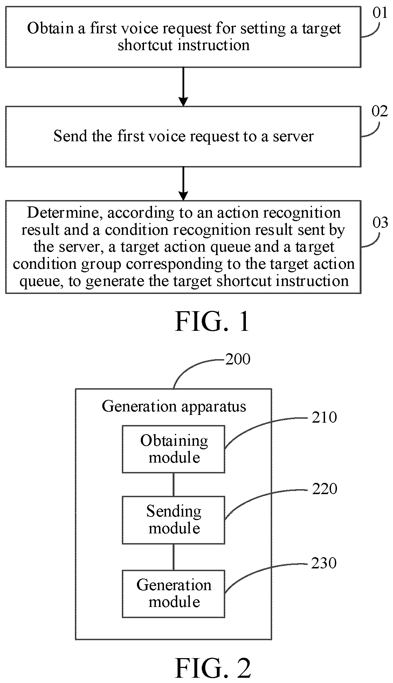

To resolve the above possible problems, referring to FIG. 1, an implementation of the present disclosure provides a shortcut instruction generation method, including:
01: A first speech request for setting a target shortcut instruction is obtained, the shortcut instruction being configured to instruct a vehicle to execute, when a condition group is satisfied, an action in an action queue corresponding to the condition group.
02: The first speech request is sent to a server, the server being configured to determine an action recognition result and a condition recognition result according to the first speech request.
03: A target action queue and a target condition group corresponding to the target action queue are determined according to the action recognition result and the condition recognition result sent by the server, to generate the target shortcut instruction.

Referring to FIG. 2, an implementation of the present disclosure provides a shortcut instruction generation apparatus 200. The shortcut instruction generation method in the implementations of the present disclosure can be implemented by the shortcut instruction generation apparatus 200 in this implementation of the present disclosure. Specifically, the generation apparatus 200 includes an obtaining module 210, a sending module 220, and a generation module 230. The obtaining module 210 is configured to obtain a first speech request for setting a target shortcut instruction, the shortcut instruction being configured to instruct a vehicle to execute, when a condition group is satisfied, an action in an action queue corresponding to the condition group. The sending module 220 is configured to send the first speech request to a server, the server being configured to determine an action recognition result and a condition recognition result according to the first speech request. The generation module 230 is configured to determine, according to the action recognition result and the condition recognition result sent by the server, a target action queue and a target condition group corresponding to the target action queue, to generate the target shortcut instruction.

An implementation of the present disclosure provides an electronic device, including a transceiver unit and a processing unit. The shortcut instruction generation method in the implementations of the present disclosure can be implemented by the electronic device in this implementation of the present disclosure. Specifically, the transceiver unit is configured to obtain a first speech request for setting a target shortcut instruction, the shortcut instruction being configured to instruct a vehicle to execute, when a condition group is satisfied, an action in an action queue corresponding to the condition group. The processing unit is configured to send a first speech request to the server, and determine, according to the action recognition result and the condition recognition result sent by the server, a target action queue and a target condition group corresponding to the target action queue, to generate the target shortcut instruction. The server is configured to determine the action recognition result and the condition recognition result according to the first speech request.

An implementation of the present disclosure provides a vehicle. The vehicle includes a memory and a processor. The shortcut instruction generation method in the implementations of the present disclosure can be implemented by the vehicle in this implementation of the present disclosure. Specifically, the memory stores a computer program. The processor is configured to obtain a first speech request for setting a target shortcut instruction, the shortcut instruction being configured to instruct a vehicle to execute, when a condition group is satisfied, an action in an action queue corresponding to the condition group, is configured to send the first speech request to a server, the server being configured to determine an action recognition result and a condition recognition result according to the first speech request, and is configured to determine, according to the action recognition result and the condition recognition result sent by the server, a target action queue and a target condition group corresponding to the target action queue, to generate a target shortcut instruction.

Specifically, in this implementation of the present disclosure, when a user wants to set a specific shortcut instruction on the vehicle, the user completes the shortcut instruction setting based on speech interaction, that is, when the user speaks the first speech request for setting the target shortcut instruction, the vehicle can obtain the first speech request and send the first speech request to the server. When receiving the first speech request, the server can call a preset algorithm or a neural network model to process and recognize the first speech request to recognize an action and a condition indicated by the first speech request, that is, obtain the action recognition result and the condition recognition result of the first speech request.

When the server obtains the action recognition result and the condition recognition result of the first speech request, the server may feed back or deliver the action recognition result and the condition recognition result to the vehicle. The vehicle can determine, based on the received action recognition result and condition recognition result, the target action queue and the target condition group corresponding to the target action queue, thereby completing the generation of the target shortcut instruction based on the target action queue and the target condition group.

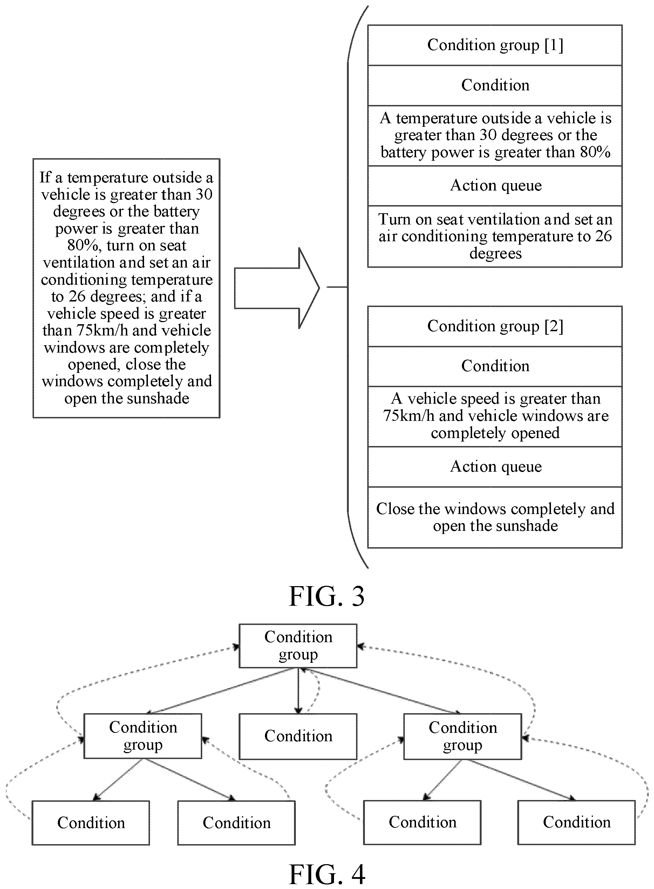

Exemplarily, to describe the implementation of the present disclosure more clearly, refer to FIG. 3. FIG. 3 is a schematic flowchart of a shortcut instruction generation method according to some implementations of the present disclosure. That is, the first speech request received by the vehicle is "if a temperature outside the vehicle is greater than 30 degrees or the battery power is greater than 80%, turn on seat ventilation and set an air conditioning temperature to 26 degrees; and if a vehicle speed is greater than 75km/h and vehicle windows are completely opened, close the windows completely and open the sunshade". In this case, the target shortcut instruction obtained based on the server and a preset program (or code) includes a condition group 1 and an action queue corresponding to the condition group 1, and also includes a condition group 2 and an action queue corresponding to the condition group 2. A condition in the condition group 1 is "a temperature outside the vehicle is greater than 30 degrees or the battery power is greater than 80%", and an action queue corresponding to the condition group 1 is "turn on seat ventilation and set an air conditioning temperature to 26 degrees". The condition group 2 is "a vehicle speed is greater than 75km/h and the vehicle windows are completely opened", and an action queue corresponding to the condition group 2 is "close the windows completely and open the sunshade".

It should be noted that the shortcut instruction in the implementations of the present disclosure can be used to cause the vehicle to execute automatic tasks, for example, start specific onboard devices under specific conditions. For example, a shortcut instruction can be used to instruct the vehicle to display a bird-eye view image when it is detected that a person enters the vehicle and the seat belt of the main driver is fastened.

It should also be noted that the first speech request in the implementations of the present disclosure includes the condition and the action required by the target shortcut instruction. Therefore, the first speech request can be recognized and processed to obtain the action recognition result and the condition recognition result. Exemplarily, in some implementations of the present disclosure, the first speech request may include: "turn on extremely fast cooling, the air conditioner blows on face and feet, and turn on blowing on people; after two minutes, turn on avoiding blowing on people; and after the temperature inside the vehicle reaches 26 degrees, exit extremely fast cooling, set the temperature to 26 degrees, and turn on the automatic mode."

In addition, the action recognition result in the implementations of the present disclosure can be understood as representing an action or a function that the vehicle needs to execute in the speech request, and the condition recognition result can be understood as representing a condition that needs to be satisfied before the vehicle executes the action or the function in the speech request.

For example, the first speech request is "turn on extremely fast cooling, the air conditioner blows on face and feet, and turn on blowing on people; after two minutes, turn on avoiding blowing on people; and after the temperature inside the vehicle reaches 26 degrees, exit extremely fast cooling, set the temperature to 26 degrees, and turn on the automatic mode". In this case, the condition recognition result corresponding to the first speech request may include "after two minutes" and "the temperature inside the vehicle reaches 26 degrees", and the action recognition result corresponding to the first speech request may include "turn on extremely fast cooling", "the air conditioner blows on face and feet", "turn on blowing on people", "turn on avoiding blowing on people", "exit extremely fast cooling", "set the temperature to 26 degrees", and "turn on the automatic mode".

It can also be understood that, after the server processes the first speech request to obtain the action recognition result and the condition recognition result, the server may send the action recognition result and the condition recognition result to the vehicle. When receiving the action recognition result and the condition recognition result, the vehicle can set the corresponding target action queue and target condition group based on the action recognition result and the condition recognition result, thereby forming the target shortcut instruction obtained by combining the target action queue and the target condition group. For details, refer to FIG. 3 again.

It can also be understood that after the target shortcut instruction is generated, the vehicle can execute each action in the target action queue in the target shortcut instruction based on the target shortcut instruction when the target condition group in the target shortcut instruction is satisfied. For example, as shown in FIG. 3, the vehicle can turn on seat ventilation and set an air conditioning temperature to 26 degrees when a temperature outside the vehicle is greater than 30 degrees or the battery power is greater than 80%.

In conclusion, in this implementation of the present disclosure, the vehicle can complete the generation of the target shortcut instruction according to the first speech request of the user and the action recognition result and the condition recognition result determined by the server, thereby avoiding to some extent that the user needs to manually type the shortcut instruction, and improving the usage experience of the shortcut instruction. The vehicle of this implementation of the present disclosure can use the server to recognize an action and a condition in the first speech request, avoiding that the vehicle locally recognizes the action and the condition in the first speech request, thereby reducing the load of the vehicle to some extent and ensuring the recognition efficiency of the action recognition result and the condition recognition result to some extent.

In some implementations of the present disclosure, an onboard system of the vehicle includes a script layer and a Java layer, and the generation method of the embodiment of the present disclosure further includes:
when determining, based on an execution function in the script layer, that the target condition group is satisfied, executing an action in the target action queue through the Java layer.

The generation apparatus in the implementations of the present disclosure further includes an execution module. The execution module is further configured to: when determining, based on an execution function in the script layer, that the target condition group is satisfied, execute an action in the target action queue through the Java layer.

A processing unit of the implementations of the present disclosure is further configured to: when determining, based on an execution function in the script layer, that the target condition group is satisfied, execute an action in the target action queue through the Java layer.

A processor of the implementations of the present disclosure is further configured to: when determining, based on an execution function in the script layer, that the target condition group is satisfied, execute an action in the target action queue through the Java layer.

Specifically, to ensure that the condition group of the shortcut instruction can include two or more conditions, and these conditions can form a condition group based on the "and" and "or" relationship, in the implementations of the present disclosure, based on the ability of a script engine to dynamically execute logic, the complex relationship (for example, "and" and "or") between conditions in the speech request is expressed in a script language.

For example, a condition group can be expressed in a script language as: if (condition A and condition B) or (condition C and condition D).

To describe the implementations of the present disclosure more clearly, refer to FIG. 4. FIG. 4 is a schematic diagram of a condition group according to some implementations of the present disclosure. That is, the implementations of the present disclosure can represent a complex relationship between conditions such as "nest", "and", and "or" in a script language.

At the same time, to ensure the efficient operation of the shortcut instruction, the system carried by the vehicle in the implementations of the present disclosure is divided into a Java layer and a script layer, and the operation of the shortcut instruction depends on the Java layer and the script layer. Corresponding interfaces and bridge methods are established between the Java layer and the script layer to achieve interaction and execute the shortcut instruction.

Specifically, for any target shortcut instruction, the vehicle in the implementations of the present disclosure can detect the condition of the target condition group in the target shortcut instruction based on the execution function in the script layer. When the target condition group is satisfied, action queue execution in the Java layer is driven, thereby achieving the interaction between the Java layer and the script layer, and the execution of the target shortcut instruction based on the Java layer and the script layer.

In this way, this implementation of the present disclosure can complete the execution of the target shortcut instruction based on the interaction between the Java layer and the script layer, and ensure the stable execution of the target shortcut instruction to some extent. Moreover, the target condition group in this implementation of the present disclosure is expressed based on a script language, allowing a complex relationship between conditions to be constructed simply and efficiently.

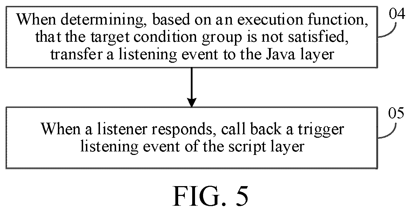

Referring to FIG. 5, in some implementations of the present disclosure, the generation method further includes:
04: When determining, based on the execution function, that the target condition group is not satisfied, a listening event is transferred to the Java layer, the Java layer setting a listener when receiving the listening event.
05: A trigger listening event of the script layer is called back when the listener responds.

The generation apparatus in the implementations of the present disclosure further includes an event transfer module and a callback module. The event transfer module is configured to: when determining, based on the execution function, that the target condition group is not satisfied, transfer a listening event to the Java layer, the Java layer setting a listener when receiving the listening event. The callback module is configured to: call back a trigger listening event of the script layer when the listener responds.

The processing unit of the implementations of the present disclosure is further configured to: when determining, based on the execution function, that the target condition group is not satisfied, transfer a listening event to the Java layer, the Java layer setting a listener when receiving the listening event, and call back a trigger listening event of the script layer when the listener responds.

The processor of the implementations of the present disclosure is further configured to: when determining, based on the execution function, that the target condition group is not satisfied, transfer a listening event to the Java layer, the Java layer setting a listener when receiving the listening event, and call back a trigger listening event of the script layer when the listener responds.

Specifically, to ensure the reliable execution of the target shortcut instruction, in the implementations of the present disclosure, a corresponding listening mechanism may be provided when the target condition group is not satisfied, so as to wait for the target condition group to be satisfied and execute a corresponding action queue when the target condition group is satisfied.

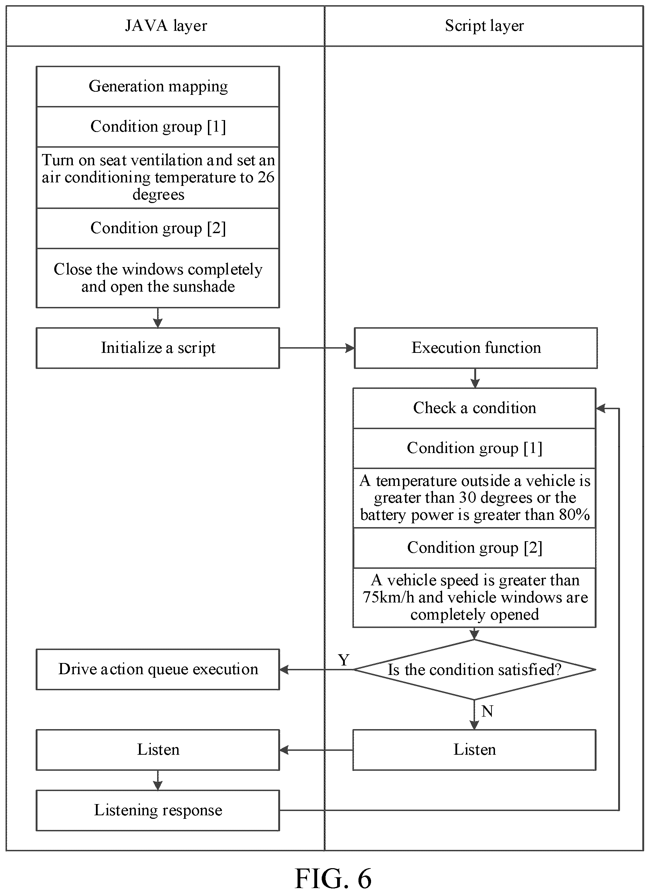

Specifically, to describe the implementations of the present disclosure more clearly, refer to FIG. 6. FIG. 6 is a schematic flowchart of a shortcut instruction generation method according to some implementations of the present disclosure. That is, after the script layer detects whether the target condition group is satisfied, if it is detected that a target condition group cannot be satisfied, the vehicle can add listening in the script layer and transfer the listening event to the Java layer, after receiving the listening event, the Java layer sets the listener, after the listener responds, the trigger listening event of the script layer is called back, and the script layer detects again whether the target condition group has been satisfied.

It can be understood that if the script layer detects the target condition group again and detects that the target condition group has been satisfied, the vehicle can drive action queue execution in the Java layer.

In this way, in this implementation of the present disclosure, when the target condition group has not been satisfied, the vehicle can listen to the target condition group to wait for the target condition group to be satisfied, which ensures the reliable execution of the target condition group to some extent.

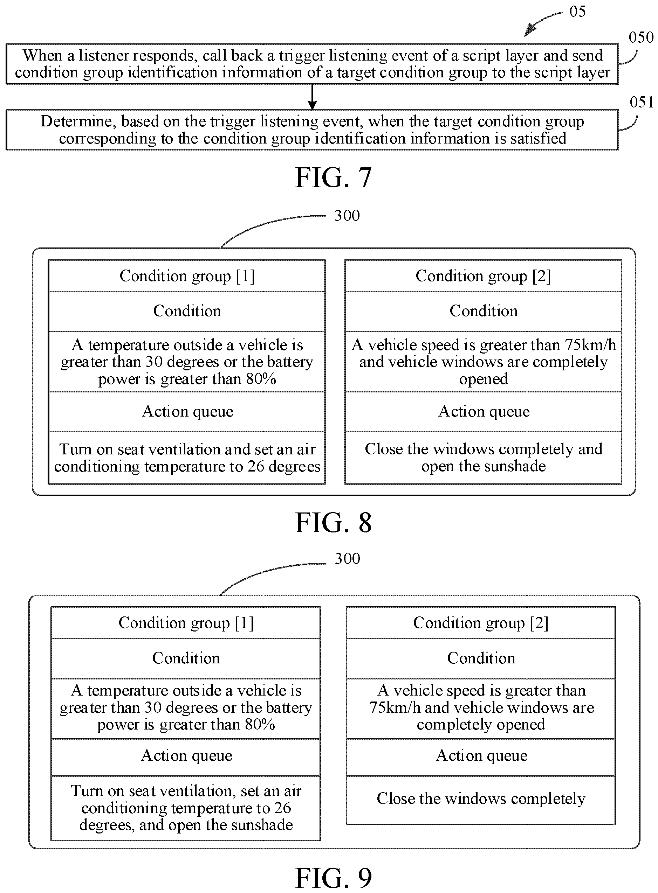

Referring to FIG. 7, in some implementations of the present disclosure, at least one target condition group is provided, at least one target action queue is provided, one target condition group corresponds to one target action queue, and step 05 includes:
050: when the listener responds, calling back the trigger listening event and sending condition group identification information of the target condition group to the script layer; and
051: determining, based on the trigger listening event, whether the target condition group corresponding to the condition group identification information is satisfied.

The callback module of this implementation of the present disclosure is further configured to: when the listener responds, call back the trigger listening event and send the condition group identification information of the target condition group to the script layer, and determine, based on the trigger listening event, whether the target condition group corresponding to the condition group identification information is satisfied.

The processing unit of this implementation of the present disclosure is further configured to: when the listener responds, call back the trigger listening event and send the condition group identification information of the target condition group to the script layer, and determine, based on the trigger listening event, whether the target condition group corresponding to the condition group identification information is satisfied.

The processor of this implementation of the present disclosure is further configured to: when the listener responds, call back the trigger listening event and send the condition group identification information of the target condition group to the script layer, and determine, based on the trigger listening event, whether the target condition group corresponding to the condition group identification information is satisfied.

Specifically, to ensure reliable detection of the target condition group, the vehicle in this implementation of the present disclosure can also transfer the condition group identification information of the target condition group to the script layer when the listener responds, so that the script layer can detect the target condition group indicated by the received condition group identification information.

To describe the implementation of the present disclosure more clearly, refer to FIG. 6 again. FIG. 6 shows the "condition group 1" and the "condition group 2". In this case, after the "condition group 1" is not satisfied and a corresponding listener is set, when the listener responds, the script layer can transfer "1" (that is, condition group identification information) to the Java layer to represent the "condition group 1". Therefore, the Java layer can detect whether the "condition group 1" is satisfied, and when the "condition group 1" is satisfied, drive action queue execution corresponding to the "condition group 1".

It can be understood that there may be a mapping relationship or correspondence between the action and the condition in the first speech request, for example, in "turn on extremely fast cooling, the air conditioner blows on face and feet, and turn on blowing on people; after two minutes, turn on avoiding blowing on people; and after the temperature inside the vehicle reaches 26 degrees, exit extremely fast cooling, set the temperature to 26 degrees, and turn on the automatic mode", there is a correspondence between the condition "after two minutes" and the action "turn on avoiding blowing on people", and there is a correspondence between the condition "the temperature inside the vehicle reaches 26 degrees" and the actions "exit extremely fast cooling" and "set the air conditioning temperature to 26 degrees". Besides, this correspondence has an impact on the execution of the shortcut instruction. Therefore, in some implementations of the present disclosure, in the process of processing and recognizing the first speech request, the server can also recognize correspondences between different conditions and different actions.

For example, the first speech request is "turn on extremely fast cooling, the air conditioner blows on face and feet, and turn on blowing on people; after two minutes, turn on avoiding blowing on people; and after the temperature inside the vehicle reaches 26 degrees, exit extremely fast cooling, set the temperature to 26 degrees, and turn on the automatic mode", the condition recognition result includes "after two minutes" and "the temperature inside the vehicle reaches 26 degrees", and the action recognition result includes "turn on extremely fast cooling", "the air conditioner blows on face and feet", "turn on blowing on people", "turn on avoiding blowing on people", "exit extremely fast cooling", "set the air conditioning temperature to 26 degrees", and "turn on the automatic mode". During the process of processing and recognizing the first speech request, the server can also recognize the correspondence between each condition recognition result and each action recognition result. The correspondence can include: (1) A condition corresponding to the actions "turn on extremely fast cooling", "the air conditioner blows on face and feet", and "turn on blowing on people" is "unconditional". (2) A condition corresponding to the action "turn on avoiding blowing on people" is "after two minutes". (3) A condition corresponding to the actions "exit extremely fast cooling", "set the air conditioning temperature to 26 degrees", and "turn on the automatic mode" is "the temperature inside the vehicle reaches 26 degrees".

Further, in some implementations of the present disclosure, after recognizing a condition, the server can generate a condition recognition result using a preset script language such as LUA, so that the condition recognition result fed back to the vehicle can be directly used as a target condition group by the vehicle.

It can be understood that based on this manner, the implementations of the present disclosure can avoid the complex process of parsing and processing a protocol message and then assembling a condition group by the vehicle after the server delivers the message, which greatly improves the flexibility of condition arrangement. At the same time, this can support setting of association between multiple conditions and multiple actions, and support setting of a complex and/or relationship between conditions.

It can also be understood that there is a correspondence between the target condition group and the target action group obtained based on the action recognition result and the condition recognition result. For example, refer to FIG. 6 again. In FIG. 6, the "condition group 1" corresponds to the action queue "turn on seat ventilation and set an air conditioning temperature to 26 degrees", and the "condition group 2" corresponds to the action queue "close the windows completely and open the sunshade".

Moreover, the condition group identification information in the implementations of the present disclosure can be understood as a sequence number of the condition group. For example, in FIG. 6, the condition group identification information of the "condition group 1" may be "1", and the condition group identification information of the "condition group 2" may be "2".

In this way, in this implementation of the present disclosure, the corresponding target condition group can be detected according to the condition group identification information of the target condition group.

In some implementations of the present disclosure, step 03 includes:
determining the target action queue and the target condition group in response to an operation of editing the action recognition result and/or the condition recognition result, to generate the target shortcut instruction.

The generation module of the implementations of the present disclosure is further configured to: determine the target action queue and the target condition group in response to an operation of editing the action recognition result and/or the condition recognition result, to generate the target shortcut instruction.

The processing unit of the implementations of the present disclosure is further configured to: determine the target action queue and the target condition group in response to an operation of editing the action recognition result and/or the condition recognition result, to generate the target shortcut instruction.

The processor of the implementations of the present disclosure is further configured to: determine the target action queue and the target condition group in response to an operation of editing the action recognition result and/or the condition recognition result, to generate the target shortcut instruction.

Specifically, to avoid errors in the action recognition result and/or the condition recognition result, which may lead to errors in the target action queue and/or the target condition group, an implementation of the present disclosure further provides a function of editing the action recognition result and/or the condition recognition result, to allow users to edit the action recognition result and the condition recognition result. Then, the target action queue and the target condition group can be determined based on the action recognition result and the condition recognition result edited by the user, thereby avoiding that the vehicle directly uses the action recognition result and the condition recognition result.

In this way, in this implementation of the present disclosure, in response to the operation of editing the action recognition result and/or the condition recognition result, the vehicle can determine the target action queue and the target condition group based on the edited action recognition result and/or condition recognition result, avoiding directly using the action recognition result and the condition recognition result.

In some implementations of the present disclosure, the condition recognition result includes a candidate condition group, the action recognition result includes a candidate action queue corresponding to the candidate condition group, and the step of determining the target action queue and the target condition group in response to an operation of editing the action recognition result and/or the condition recognition result, to generate the target shortcut instruction includes:
in response to an operation of editing at least one of the candidate action queue, the candidate condition group, and a correspondence between the candidate action queue and the candidate condition group, determining the target action queue and the target condition group.

The generation module of the implementations of the present disclosure is further configured to: in response to an operation of editing at least one of the candidate action queue, the candidate condition group, and a correspondence between the candidate action queue and the candidate condition group, determine the target action queue and the target condition group to generate the target shortcut instruction.

The processing unit of the implementations of the present disclosure is further configured to: in response to an operation of editing at least one of the candidate action queue, the candidate condition group, and a correspondence between the candidate action queue and the candidate condition group, determine the target action queue and the target condition group to generate the target shortcut instruction.

The processor of the implementations of the present disclosure is further configured to: in response to an operation of editing at least one of the candidate action queue, the candidate condition group, and a correspondence between the candidate action queue and the candidate condition group, determine the target action queue and the target condition group to generate the target shortcut instruction.

Specifically, in the implementations of the present disclosure, to ensure that users can freely arrange conditions and actions, a condition arrangement function, an action arrangement function, and an arrangement function of the correspondence between a condition and an action are provided. Furthermore, users can arrange a condition (that is, a candidate condition group), an action (that is, a candidate action queue), and the relationship between a condition and an action according to actual needs.

For example, refer to FIG. 3 again. The first speech request is "if a temperature outside the vehicle is greater than 30 degrees or the battery power is greater than 80%, turn on seat ventilation and set an air conditioning temperature to 26 degrees; and if a vehicle speed is greater than 75km/h and vehicle windows are completely opened, close the windows completely and open the sunshade". In this case, the candidate condition group obtained based on the server includes a condition group 1 and a condition group 2. The condition group 1 is "a temperature outside the vehicle is greater than 30 degrees or the battery power is greater than 80%", and an action queue corresponding to the condition group 1 is "turn on seat ventilation and set an air conditioning temperature to 26 degrees". The condition group 2 is "a vehicle speed is greater than 75km/h and the vehicle windows are completely opened", and an action queue corresponding to the condition group 2 is "close the windows completely and open the sunshade". The user can execute editing operations according to actual needs.

In an example, content determined by the vehicle based on an editing operation triggered by the user may include: The condition group 1 is "a temperature outside the vehicle is greater than 26 degrees or the battery power is greater than 80%", and an action queue corresponding to the condition group 1 is "turn on seat ventilation and set an air conditioning temperature to 24 degrees". The condition group 2 is "a vehicle speed is greater than 60km/h and the vehicle windows are completely opened", and an action queue corresponding to the condition group 2 is "close the windows completely and open the sunshade".

Therefore, the target condition group may include the edited condition group 1 and condition group 2, and the target action queue may include "turn on seat ventilation and set an air conditioning temperature to 24 degrees" corresponding to the edited condition group 1, and include "close the windows completely and open the sunshade" corresponding to the edited condition group 2, to complete the setting of the target shortcut instruction.

In this way, in this implementation of the present disclosure, the vehicle can modify at least one of the candidate action queue, the candidate condition group, and the correspondence between the candidate action queue and the candidate condition group based on the editing operation triggered by the user, so that the target action queue and the target condition group corresponding to the target action queue can be set properly.

In some implementations of the present disclosure, the shortcut instruction generation method further includes:
controlling a display component of the vehicle to display the action recognition result and the condition recognition result.

The generation module in the implementations of the present disclosure is further configured to control a display component of the vehicle to display the action recognition result and the condition recognition result.

The processing unit in the implementations of the present disclosure is further configured to control a display component of the vehicle to display the action recognition result and the condition recognition result.

The processor in the implementations of the present disclosure is further configured to control a display component of the vehicle to display the action recognition result and the condition recognition result.

Specifically, to enable users to reliably edit the action recognition result and the condition recognition result, in the implementations of the present disclosure, when the action recognition result and the condition recognition result fed back by the server are obtained, the display component such as a central control display can further be used to display the action recognition result and the condition recognition result, allowing users to intuitively observe the action recognition result and the condition recognition result and then execute corresponding editing operations.

To describe the implementations of the present disclosure more clearly, refer to FIG. 8. FIG. 8 a schematic diagram of an application scenario according to some implementations of the present disclosure. The condition recognition result received by the vehicle includes the condition group 1 and the condition group 2. The condition group 1 is "a temperature outside the vehicle is greater than 30 degrees or the battery power is greater than 80%", and the condition group 2 is "a vehicle speed is greater than 75km/h and vehicle windows are completely opened". At the same time, the action recognition result received by the vehicle includes the action queue "turn on seat ventilation and set an air conditioning temperature to 26 degrees" corresponding to the condition group 1, and the action recognition result further includes the action queue "close the windows completely and open the sunshade" corresponding to the condition group 2. Therefore, the vehicle can control a central control display 300 to display the condition group 1, the condition group 2, and the action queues corresponding to the two groups, so that the user can trigger corresponding editing operations through drag, click, typing, speech, and the like, to execute operations, for example, add, delete, and modify each condition in the condition group, each action in the action queue, and the relationship between each condition and each action.

For example, based on the screen shown in FIG. 8, the user can select and drag text display content of "open the sunshade" to drag "open the sunshade" leftwards to the action queue corresponding to the condition group 1, thereby forming content shown in FIG. 9 for an editing operation. FIG. 9 is a schematic diagram of an application scenario according to some implementations of the present disclosure.

In this way, in this implementation of the present disclosure, the vehicle can control the display component to display the action recognition result and the condition recognition result fed back by the server, so that the user can edit the action recognition result and/or the condition recognition result based on display content of the display component, thereby ensuring the reliable execution of the editing operation to some extent.

In some implementations of the present disclosure, at least one target condition group is provided, at least one target action queue is provided, one target condition group corresponds to one target action queue, and the generation method further includes:
executing the corresponding target action queue according to the satisfied target condition group in the target shortcut instruction.

The generation apparatus in the implementations of the present disclosure further includes an execution module. The execution module is configured to execute the corresponding target action queue according to the satisfied target condition group in the target shortcut instruction.

The processing unit in the implementations of the present disclosure is further configured to execute the corresponding target action queue according to the satisfied target condition group in the target shortcut instruction.

The processor in the implementations of the present disclosure is further configured to execute the corresponding target action queue according to the satisfied target condition group in the target shortcut instruction.

Specifically, in the implementations of the present disclosure, the target shortcut instruction can include multiple target condition groups and multiple target action queues, and a number of target condition groups and a number of target action queues can be both set according to the actual case. For example, one target shortcut instruction includes one target condition group and one target action queue. In another example, one target shortcut instruction includes three target condition groups and four target action queues.

It can be understood that since the user may set, when setting a shortcut instruction, an action that can be executed without any condition, the number of target action queues may be greater than or equal to the number of target condition groups in the same target shortcut instruction.

It can also be understood that when the target shortcut instruction can include multiple target condition groups and multiple target action queues, one target condition group can correspond to one target action queue. For example, refer to FIG. 3 again. The condition group 1 and the condition group 2 in FIG. 3 are both target condition groups, and then the condition group 1 and the condition group 2 respectively correspond to different target action queues.

Besides, based on the correspondence between the target condition group and the target action queue, the vehicle can execute different target action queues through one target shortcut instruction.

For example, refer to FIG. 3 again. The condition group 1 and the condition group 2 in FIG. 3 are both target condition groups, and then the condition group 1 and the condition group 2 respectively correspond to different target action queues. In this case, when the condition group 1 is satisfied, the vehicle can execute the target action queue corresponding to the condition group 1, that is, "turn on seat ventilation and set an air conditioning temperature to 26 degrees." When the condition group 2 is satisfied, the vehicle can execute the action queue corresponding to the condition group 2, that is, "close the windows completely and open the sunshade".

In this way, in this implementation of the present disclosure, the target action queue corresponding to the satisfied target condition group can be executed during the execution of the target shortcut instruction, thereby ensuring the proper execution of the target shortcut instruction to some extent.

In some implementations of the present disclosure, step 01 includes:
when the vehicle is in a shortcut instruction setting state, obtaining the first speech request.

The obtaining module in the implementations of the present disclosure is further configured to: when the vehicle is in a shortcut instruction setting state, obtain the first speech request.

The transceiver unit in the implementations of the present disclosure is further configured to: when the vehicle is in a shortcut instruction setting state, obtain the first speech request.

The processor in the implementations of the present disclosure is further configured to: when the vehicle is in a shortcut instruction setting state, obtain the first speech request.

Specifically, to ensure the proper setting of the shortcut instruction, the vehicle in the implementations of the present disclosure further sets a shortcut instruction setting condition, to avoid that users accidentally trigger the shortcut instruction setting function when using some functions (for example, an alarm clock function) of the vehicle through speech. Specifically, the vehicle in the implementations of the present disclosure can receive, in the shortcut instruction setting state, the first speech request spoken by the user, and send the first speech request to the server to execute subsequent steps.

In this way, in this implementation of the present disclosure, the vehicle can obtain, in the shortcut instruction setting state, the first speech request for setting the target shortcut instruction, thereby ensuring the proper setting of the target shortcut instruction to some extent.

In some implementations of the present disclosure, the generation method further includes:
when the vehicle is in a preset working state and a second speech request is obtained, entering the shortcut instruction setting state.

The generation apparatus in the implementations of the present disclosure further includes a state entry module. The state entry module is configured to: when the vehicle is in a preset working state and a second speech request is obtained, enter the shortcut instruction setting state.

The processing unit in the implementations of the present disclosure is further configured to: when the vehicle is in a preset working state and a second speech request is obtained, enter the shortcut instruction setting state.

The processor in the implementations of the present disclosure is further configured to: when the vehicle is in a preset working state and a second speech request is obtained, enter the shortcut instruction setting state.

Specifically, the vehicle in the implementations of the present disclosure can determine, when the vehicle is in the preset working state and the second speech request triggered by the user is obtained, that the user intends to set a shortcut instruction, and therefore enter the shortcut instruction setting state to wait for reception of the first speech request.

The preset working state can be understood as a vehicle wake-up state, or can be understood as a state in which the vehicle is powered on and the central control display has been awakened and is in a normal working state.

Besides, the second speech request may include speech information with similar semantics such as "I want to set the shortcut instruction" and "start shortcut instruction setting".

In this way, in this implementation of the present disclosure, the vehicle can enter the shortcut instruction setting state when the vehicle is in the preset working state and the second speech request triggered by the user is obtained.

Optionally, in some implementations of the present disclosure, the vehicle can execute at least two rounds of dialog when entering the shortcut instruction setting state, where one round is used to ask for a name of the shortcut instruction, and the other round is used to guide the user to speak the first speech request.

In some implementations of the present disclosure, the action recognition result and the condition recognition result are jointly obtained by the server by executing natural language processing on a speech recognition result of the first speech request based on a pre-trained natural language processing model.

Specifically, to ensure the accuracy of the condition recognition result and the action recognition result, the server in the implementations of the present disclosure can be equipped with a pre-trained natural language processing model to complete the recognition and recognition of the first speech request through machine learning.

At the same time, to ensure that the first speech request can be processed by the natural language processing model, the server in the implementations of the present disclosure can further obtain the speech recognition result of the first speech request, to convert the first speech request into corresponding text information and then recognize conditions and actions through the natural language processing model.

In this way, in this implementation of the present disclosure, the condition recognition result and the action recognition result can be obtained based on the speech recognition result of the first speech request and the pre-trained natural language processing model. Therefore, the accuracy of the condition recognition result and the action recognition result can be ensured.

Optionally, in some implementations of the present disclosure, the pre-trained natural language processing model includes a large language model (Large Language Model, LLM).

Optionally, in some implementations of the present disclosure, the server is equipped with a pre-trained ASR (Automatic Speech Recognition, Automatic Speech Recognition) model. Therefore, the server can execute speech recognition on the first speech request through the ASR model to obtain a speech recognition result.

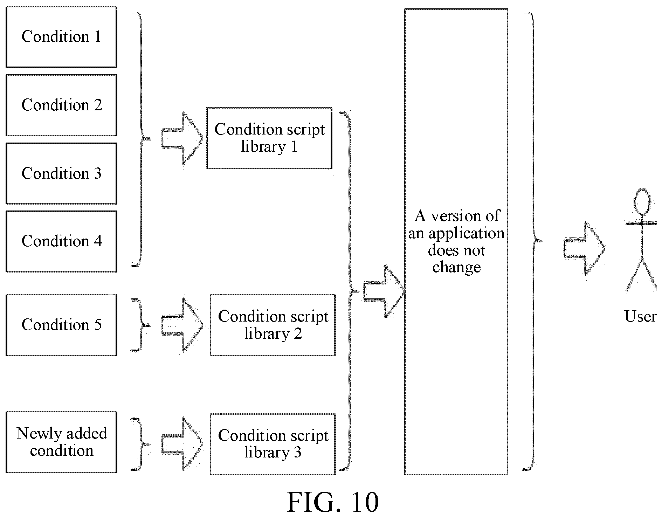

Optionally, in some implementations of the present disclosure, refer to FIG. 10 for details. FIG. 10 is a schematic diagram of an application scenario according to some implementations of the present disclosure. Specifically, when the condition recognition result includes a candidate condition group, the server in the implementations of the present disclosure can package, when obtaining the candidate condition group, the candidate condition group into a condition script library in the form of a condition script library, and deliver the condition script library to the vehicle, to avoid that a version of an application created by the vehicle needs to be updated or developed separately.

More specifically, as shown in FIG. 10, when the candidate condition group includes a condition 1 to a condition 4, for the condition 1 to the condition 4 of script speech writing, the server can form a first version of the condition script library based on the condition 1 to the condition 4, and send the first version of the condition script library to the vehicle, so that after receiving the first version of the condition script library, the vehicle can configure the target condition group based on the first version of the condition script library.

When the user triggers a new first speech request again and the server generates "a second version of the condition script library formed based on a condition 5", the server can send the second version of the condition script library to the vehicle, thereby upgrading the condition script library. Subsequent new conditions can all be sent to the vehicle based on the corresponding condition script library to complete the version upgrade of the condition script library on the vehicle side.

In this way, the implementations of the present disclosure are based on a condition script library, and can support dynamic script delivery and execution, avoid a problem that new condition addition requires the development of a pre-embedded app (Application, Application) version in advance, and greatly improve the ability of dynamic operations.

Optionally, in some implementations of the present disclosure, the app checks and updates the condition script library after startup, obtains all status interfaces on the vehicle side through reflection during runtime, and supports listening setting.

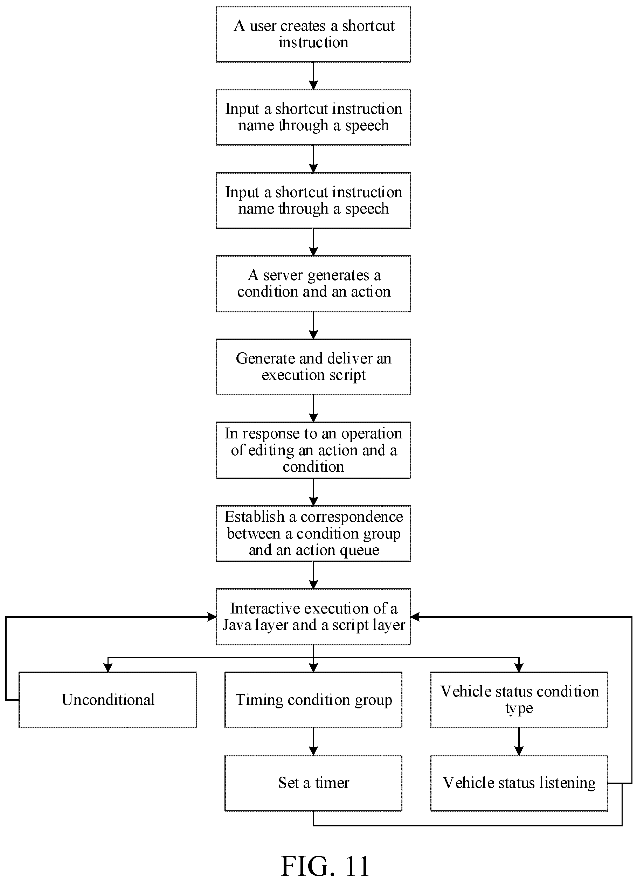

Optionally, in some implementations of the present disclosure, refer to FIG. 11 for details. FIG. 11 is a schematic flowchart of a shortcut instruction generation method according to some implementations of the present disclosure. Specifically, in some implementations of the present disclosure, when a user intends to create a shortcut instruction so that the vehicle is in the shortcut instruction setting state, the vehicle can conduct at least one round of dialog with the user to request the user to input a name of the shortcut instruction through speech, and the vehicle may also conduct at least one round of dialog with the user to request the user to input description content of the shortcut instruction through speech, that is, the first speech request.

When obtaining the first speech request, the vehicle may send the first speech request to the server. The server can recognize, based on the pre-trained natural language model, the candidate action queue and the candidate condition group indicated by the first speech request. Moreover, the server can also generate a corresponding execution script according to the candidate condition group, and then send the execution script corresponding to the candidate condition group together with the recognized candidate action queue to the vehicle.

After receiving the candidate action queue and the candidate condition group represented by the execution script, the vehicle can determine at least one final target action queue in response to a user editing operation on any one of the candidate action queue, the candidate condition group, and the "correspondence between the candidate condition group and the candidate action queue", and determine the target action queue corresponding to each target condition group, thereby obtaining the target shortcut instruction.

When the target condition group and the target action queue are determined, a Java layer of the vehicle can establish a correspondence between each target condition group and each target action queue, and then cooperate with the script layer to complete the execution of the target shortcut instruction.

It should be noted that the action queue in the implementations of the present disclosure can be divided into three categories: an unconditional action queue, an action queue corresponding to a timing condition group, and an action queue corresponding to a vehicle status determining condition group.

Further, for the "unconditional action queue", the vehicle can immediately execute the "unconditional action queue" when the target shortcut instruction is started or runs.

For the "action queue corresponding to the timing condition group", the vehicle can first determine whether a time corresponding to a timing condition has expired. For example, when the timing condition group is "12 noon on January 26, 2020", but the current time is "February 20, 2024", the time has expired. When the time corresponding to the timing condition has expired, the vehicle can send prompt information for a user to confirm and modify the time. When the time corresponding to the timing condition has not expired, the vehicle can set a timer so that when a specified time is reached, the Java layer drives queue task execution.

For the "action queue corresponding to a vehicle status determining condition group", the vehicle can first determine whether a current vehicle status has been satisfied. If yes, the action queue is executed, and if not, a listener is set until the listener obtains through listening that the vehicle status determining condition group is satisfied, and the Java layer drives queue task execution.

As discussed, embodiments of the invention provide a shortcut instruction generation method, comprising: obtaining a first speech request for setting a target shortcut instruction, the shortcut instruction being configured to instruct a vehicle to execute, when a condition group is satisfied, an action in an action queue corresponding to the condition group; sending the first speech request to a server, the server being configured to determine an action recognition result and a condition recognition result according to the first speech request; and determining, according to the action recognition result and the condition recognition result sent by the server, a target action queue and a target condition group corresponding to the target action queue, to generate the target shortcut instruction.

The "condition group" may refer to a group of conditions, for example relating to conditions associated with the vehicle. In other words, the condition group may refer to a group of conditions of relating to the status of the vehicle (e.g. that can be detected by a device such as a sensor). The conditions in the condition group may be linked with "and" or "or". For example, a condition group can be expressed in a script language as: if (condition A and condition B) or (condition C and condition D).

The condition group may be associated with one or more actions, with these actions forming an "action queue". Hence, if one of the conditions in the condition group is satisfied, then an action in the action queue may be performed. The action queue may define a set of actions to be performed, for example, in a specific order.

The "action recognition result" may correspond to a recognized action. The "condition recognition result" may correspond to a recognized condition. Hence, determining an action recognition result and a condition recognition result according to the first speech request may involve analyzing the first speech request so as to break it down into action recognition result(s) and condition recognition result(s). Once this is done, a target action queue and a target condition group corresponding to the target action queue may be determined, so as to generate the target shortcut instruction.

The "target shortcut instruction" may correspond to the intended shortcut instruction, with the target shortcut instruction having a target action queue and a target condition group corresponding to the target action queue.

The action recognition result(s) and a condition recognition result(s) may be provided to the user, and edited. The target action queue and a target condition group corresponding to the target action queue may be determined based on the edited action recognition result and condition recognition result.

The shortcut instruction generation method may be performed by a vehicle in communication with the server.

An implementation of the present disclosure provides a vehicle. The vehicle includes a vehicle body and the above electronic device.

An implementation of the present disclosure further provides a computer-readable storage medium, storing a computer program, and when the computer program is executed by one or more processors, the above shortcut instruction generation method being executed.

In the description of this specification, description of reference terms such as "specifically", "further", "particularly", or "it can be understood", means that specific features, structures, materials, or features described with reference to the implementation or example are included in at least one implementation or example of the present disclosure. In this specification, exemplary descriptions of the foregoing terms do not necessarily refer to the same implementation or example. In addition, the described specific features, structures, materials, or features may be combined in a proper manner in any one or more of the implementations or examples. In addition, a person skilled in the art may integrate or combine different embodiments or examples described in the specification and features of the different embodiments or examples as long as they are not contradictory to each other.

A description of any process or method in the flowcharts or described herein in another manner can be construed as representing one or more modules, fragments, or parts that include code of executable instructions used to implement a specific logical function or steps of a process. In addition, the scope of the exemplary implementations of the present disclosure includes another implementation, where functions can be executed not in an order shown or discussed, including executing the functions basically at the same time or in reverse order according to the functions involved. This should be understood by a person skilled in the technical field to which the embodiments of the present disclosure belong.

Although the implementations of the present disclosure have been shown and described above, it can be understood that, the foregoing implementations are exemplary and should not be understood as limitation to the present disclosure. A person of ordinary skill in the art can make changes, modifications, replacements, or variations to the foregoing implementations within the scope of the present disclosure.

## Claims

1. A shortcut instruction generation method, comprising:
obtaining a first speech request for setting a target shortcut instruction, the shortcut instruction being configured to instruct a vehicle to execute, when a condition group is satisfied, an action in an action queue corresponding to the condition group;
sending the first speech request to a server, the server being configured to determine an action recognition result and a condition recognition result according to the first speech request; and
determining, according to the action recognition result and the condition recognition result sent by the server, a target action queue and a target condition group corresponding to the target action queue, to generate the target shortcut instruction.

2. The method according to claim 1, wherein an onboard system of the vehicle comprises a script layer and a Java layer, and the method further comprises:
when determining, based on an execution function in the script layer, that the target condition group is satisfied, executing an action in the target action queue through the Java layer.

3. The method according to claim 2, further comprising:
when determining, based on the execution function, that the target condition group is not satisfied, transferring a listening event to the Java layer, the Java layer setting a listener when receiving the listening event; and
calling back a trigger listening event of the script layer when the listener responds.

4. The method according to claim 3, wherein at least one target condition group is provided, at least one target action queue is provided, one target condition group corresponds to one target action queue, and the calling back a trigger listening event of the script layer when the listener responds comprises:
when the listener responds, calling back the trigger listening event and sending condition group identification information of the target condition group to the script layer; and
determining, based on the trigger listening event, whether the target condition group corresponding to the condition group identification information is satisfied.

5. The method according to any one of claims 1 to 4, wherein the determining, according to the action recognition result and the condition recognition result sent by the server, a target action queue and a target condition group corresponding to the target action queue, to generate the target shortcut instruction comprises:
determining the target action queue and the target condition group in response to an operation of editing the action recognition result and/or the condition recognition result, to generate the target shortcut instruction.

6. The method according to claim 5, wherein the condition recognition result comprises a candidate condition group, the action recognition result comprises a candidate action queue corresponding to the candidate condition group, and the determining the target action queue and the target condition group in response to an operation of editing the action recognition result and/or the condition recognition result, to generate the target shortcut instruction comprises:
in response to an operation of editing at least one of the candidate action queue, the candidate condition group, and a correspondence between the candidate action queue and the candidate condition group, determining the target action queue and the target condition group to generate the target shortcut instruction.

7. The method according to any one of claims 1 to 6, further comprising:
controlling a display component of the vehicle to display the action recognition result and the condition recognition result.

8. The method according to any one of claims 1 to 7, wherein at least one target condition group is provided, at least one target action queue is provided, one target condition group corresponds to one target action queue, and the method further comprises:
executing the corresponding target action queue according to the satisfied target condition group in the target shortcut instruction.

9. The method according to any one of claims 1 to 8, wherein the obtaining a first speech request for setting a target shortcut instruction comprises:
when the vehicle is in a shortcut instruction setting state, obtaining the first speech request.

10. The method according to claim 9, further comprising:
when the vehicle is in a preset working state and a second speech request is obtained, entering the shortcut instruction setting state.

11. The method according to any one of claims 1 to 10, wherein the action recognition result and the condition recognition result are jointly obtained by the server by executing natural language processing on a speech recognition result of the first speech request based on a pre-trained natural language processing model.

12. An electronic device, comprising: comprising a transceiver unit and a processing unit;
the transceiver unit being configured to obtain a first speech request for setting a target shortcut instruction, the shortcut instruction being configured to instruct a vehicle to execute, when a condition group is satisfied, an action in an action queue corresponding to the condition group; and
the processing unit being configured to send the first speech request to a server and determine, according to an action recognition result and a condition recognition result sent by the server, a target action queue and a target condition group corresponding to the target action queue, to generate the target shortcut instruction, and the server being configured to determine the action recognition result and the condition recognition result according to the first speech request.

13. A vehicle, comprising: a memory and a processor, the memory storing a computer program containing instructions such that when the computer program is executed by the processor the method according to any one of claims 1 to 11 is executed.

14. A computer-readable storage medium, storing a computer program containing instructions such that when the computer program is executed by one or more processors the method according to any one of claims 1 to 11 is executed.
